# EUROPÄISCHE PATENTSCHRIFT

(11) **EP 1 743 455 B1**
(45) Veröffentlichungstag und Bekanntmachung des Hinweises auf die Patenterteilung: **08.04.2009**
(21) Anmeldenummer: 05708041.8
(22) Anmeldetag: 21.02.2005
(51) Int. Cl.: H04L 12/28

(54) **VERFAHREN ZUR SIGNALÜBERTRAGUNG IN EINEM FUNK-KOMMUNIKATIONSSYSTEM**
METHOD FOR SIGNAL TRANSMISSION IN A RADIOCOMMUNICATION SYSTEM
PROCEDE DE TRANSMISSION DE SIGNAL DANS UN SYSTEME DE COMMUNICATION RADIO

(30) Priorität: 05.05.2004 DE 102004022145
(43) Veröffentlichungstag der Anmeldung: 17.01.2007
(73) Patentinhaber: SIEMENS AKTIENGESELLSCHAFT, 80333 München (DE)
(72) Erfinder: LOTT, Matthias, 82061 Neuried (DE)
(74) Vertreter: Michalski Hüttermann & Partner Patentanwälte
(86) Internationale Anmeldenummer: PCT/EP2005/050736
(87) Internationale Veröffentlichungsnummer: WO 2005/109759

(56) Entgegenhaltungen:
- EP-A- 1 246 412
- LOTT M ET AL: "Exploitation of Multiple Frequency Channels in WLAN" 23. März 2004 (2004-03-23), PROCEEDINGS OF THE 1ST INTERNATIONAL WORKSHOP ON INTELLIGENT TRANSPORTATION (WIT 2004), HAMBURG, GERMANY , XP009048442 in der Anmeldung erwähnt Kapitel "II.A Requirements and Challenges" Kapitel "III. Decentralized FDMA"
- LOTT M ET AL: "A frequency agile air-interface for inter-vehicle communication" 23. Februar 2003 (2003-02-23), TELECOMMUNICATIONS, 2003. ICT 2003. 10TH INTERNATIONAL CONFERENCE ON FEB. 23 - MAR. 1, 2003, PISCATAWAY, NJ, USA,IEEE, PAGE(S) 507-514 , XP010637856 ISBN: 0-7803-7661-7 Kapitel "2.1 Decentralized FDMA"
- JENHUI CHEN ET AL: "A new multichannel access protocol for IEEE 802.11 ad hoc wireless LANs" 7. September 2003 (2003-09-07), PERSONAL, INDOOR AND MOBILE RADIO COMMUNICATIONS, 2003. PIMRC 2003. 14TH IEEE PROCEEDINGS ON SEPT. 7-10, 2003, PISCATAWAY, NJ, USA,IEEE, PAGE(S) 2291-2296 , XP010678039 ISBN: 0-7803-7822-9 Kapitel "I. Introduction" Kapitel "II. Multichannel Access Protocol (MAP)"

## Beschreibung

Die Erfindung betrifft ein Verfahren zur Signalübertragung in einem Funk-Kommunikationssystem, insbesondere in einem dezentral organisierten Funk-Kommunikationssystem.

Zukünftige Funksysteme werden sehr hohe Datenraten unterstützen, um beispielsweise multimediale Anwendungen mit einer erforderlichen Dienstgüte bedienen zu können. Es ist zudem eine weiter zunehmende Teilnehmerzahl zu erwarten, so dass weitere Frequenzbänder für die Nutzung durch Funksysteme erschlossen werden müssen. Zur effizienten Nutzung dieser Frequenzbänder müssen Funksysteme jedoch über einen großen Frequenzbereich operieren.

In Funksystemen werden verschiedene Verfahren zur Ressourcenaufteilung und zum Multiplexen verwendet. Neben dem Multiplexen im Zeitbereich (Time Division Multiplex, TDM) und Codebereich (Code Division Multiplex, CDM) werden verschiedene Frequenzkanäle durch das FDM-Verfahren (Frequency Division Multiplex) realisiert. Bei dem FDM-Verfahren wird ein breites Frequenzspektrum in viele, im Frequenzbereich getrennte Frequenzkanäle mit jeweils schmaler Bandbreite aufgeteilt, wodurch ein durch die Abstände der Trägerfrequenzen definiertes Frequenzkanalraster entsteht. Vorteilhaft können hierdurch gleichzeitig mehrere Teilnehmer auf unterschiedlichen Frequenzkanälen bedient und die Ressourcen besser individuellen Bedürfnissen der Teilnehmer angepasst werden. Ein ausreichender Abstand zwischen den Frequenzkanälen stellt dabei sicher, dass Störungen zwischen den Kanälen verringert und kontrolliert werden können.

Weiterhin können durch die Trennung in mehrere Frequenzkanäle Dienste mit unterschiedlichen Dienstgüteanforderungen (QoS - Quality of Service) angeboten werden. Höher priorisierte Dienste stehen in diesem Fall nicht im Wettbewerb mit niedriger priorisierten Diensten, wodurch vorteilhaft Dienstgüteanforderungen durch eine Ressourcenzuteilung in Frequenzbereichen garantiert werden können.

Für die Nutzung schmalbandiger Frequenzkanäle durch ein entsprechendes, FDMA (Frequency Division Multiple Access) genanntes Zugriffsverfahren müssen Sender und Empfänger koordiniert jeweils eine entsprechende Trägerfrequenz auswählen. Vor einer Nutzung der entsprechenden Ressource, d.h. des Frequenz- bzw. Funkkanals, muss weiterhin überprüft werden, ob die gewählte Ressource nicht bereits von anderen Stationen genutzt wird. Anschließend wird die Ressource reserviert und die Reservierung gegebenenfalls anderen potenziellen Stationen mitgeteilt, so dass diese Stationen im folgenden nicht zeitgleich auf die Ressource zugreifen und Kollisionen verursachen. Dabei besteht die Herausforderung, mit wenig Aufwand und möglichst nur einem Sender und Empfänger (Transceiver) je Station die Nutzung dieser Frequenzen möglichst effizient zu gestalten. Hinzu kommt gegebenenfalls die Randbedingung, dass alle Stationen gleichberechtigt sind, d.h. keine Station Kontrollfunktionen über mehrere Stationen zur Vergabe der Frequenzkanäle übernimmt.

Insbesondere in selbstorganisierenden Netzen und Netzen ohne Infrastruktur, so genannten Ad-hoc-Netzen, existieren häufig gleichberechtigte Stationen, die gleiche Algorithmen und Protokolle durchführen. Ein bekanntes Beispiel für derartige Netze ist das drahtlose lokale Netz (Wireless LAN) nach dem Standard IEEE 802.11.

Sind in solchen Netzen die Stationen nicht über die Nutzung der Frequenzkanäle durch weitere Stationen informiert, da entsprechende Informationen nicht durch eine zentrale Station gesammelt und verteilt werden, so kann eine Station nicht entscheiden, welchen Frequenzkanal sie für eine Kommunikation mit einer anderen Station vorschlagen bzw. auswählen soll. Zudem weiß eine Station nicht, wann eine andere Station auf welcher Frequenz empfangsbereit ist. Eine Station könnte somit in der Regel keine Verbindung mit einer weiteren Station aufbauen, wenn die Frequenzkanäle von beiden beliebig gewählt würden. Außerdem würde ein Verteildienst (Broadcast) auf einer Frequenz nur einen Teil der Stationen erreichen, die zufällig auf dieser Frequenz empfangsbereit sind.

Es ist daher erforderlich, die Nutzung dieser orthogonalen Ressourcen zu koordinieren. Falls zu diesem Zweck eine bestimmte Frequenz zu fest vorgegebenen Zeiten genutzt werden soll, d.h. alle Stationen sind auf dieser Frequenz empfangsbereit, dann können die parallel dazu vorhandenen Frequenzen nicht genutzt werden. Diese Ressourcen wären dann ungenutzt und nicht verfügbar für diese Stationen.

In bestehenden zellularen Mobilfunksystemen werden die Frequenzen durch eine zentrale Station, die Basisstation (BS - Base Station), den in einer Funkzelle der Basisstation befindlichen Mobilstationen (MS - Mobile Station) zugewiesen. Im GSM (Global System for Mobile Communication) wird beispielsweise ein zentraler Frequenzkanal je Funkzelle zur Aussendung von allgemeinen Informationen verwendet, der von den Mobilstationen dazu genutzt wird, einen Frequenzkanal für die Anmeldung und Anforderung von Ressourcen zu erfahren. Möchte eine Station, insbesondere eine Mobilstation Daten übertragen, so fordert sie diese auf dem ihr bekannten Frequenzkanal bei der Basisstation an. Die Basisstation teilt daraufhin der Mobilstation die entsprechende Trägerfrequenz mit, auf der sie mit der Basisstation kommunizieren kann. Die Zuweisung und das Management der zur Verfügung stehenden Ressourcen wird zentral in einer der Basisstation übergeordneten Basisstationssteuerung (BSC - Base Station Controller) gesteuert und von der Basisstation signalisiert. Gleiches gilt für Systeme der dritten Generation UMTS (Universal Mobile Telecommunications System), die ebenfalls nach dem zentralen Ansatz mit Hilfe einer Basisstation die Zuordnung von Frequenzen signalisieren. Aufgrund der zentralen Steuerung kann dieser Ansatz nicht in einem dezentral organisierten System ohne zentrale Instanz angewendet werden.

Andere Systeme, wie z.B. WLAN-Systeme (Wireless Local Area Network) nach dem Standard HIPERLAN Typ 2, beispielsweise aus dem Dokument ETSI/BRAN "Broadband Radio Access Networks (BRAN); HIPERLAN Type 2 Functional Specification Data Link Control (DLC) Layer; Part 4 - Extension for Home Environments, Draft DTR/BRAN-0020004-4, ETSI, Sophia Antipolis, France, April 2000, bekannt, oder nach dem Standard IEEE 802.11, verwenden für die Kommunikation zwischen zwei oder mehr Stationen nur eine einzige Trägerfrequenz. Ein Wechsel auf eine andere Frequenz dient dazu, Störungen aufgrund beispielsweise einer bereits bestehenden Nutzung der ausgewählten Frequenz durch andere Stationen auszuweichen. Wird eine neue, nutzbare Trägerfrequenz gefunden, so wechseln alle der zuvor miteinander kommunizierenden Stationen auf diese Frequenz, um auf dieser Frequenz zu senden und zu empfangen. In HIPERLAN/2 ist dieses Verfahren unter dem Begriff Dynamic Frequency Selection (DFS) bekannt. Eine gleichzeitige bedarfsabhängige Nutzung mehrerer Frequenzen durch beliebige Stationen zur Erhöhung der möglichen Gesamtkapazität des System bzw. einer individuellen Verbindung ist jedoch nicht vorgesehen. Die maximale Datenrate ist somit auf einen Frequenzkanal begrenzt.

Ähnlich dem DFS-Verfahren nach dem HIPERLAN/2 Standard ist ein System bekannt, in dem Fahrzeuge Gruppen formen, die unterschiedliche Frequenzen nutzen. Benachbarte Fahrzeuge teilen sich dabei dieselbe Trägerfrequenz. Durch Messung der aktiven Frequenzkanäle ist es möglich, gleichzeitig in mehreren Gruppen zu partizipieren und Gruppen zu wechseln, um die sich ändernden Netztopologien zu berücksichtigen. Dabei wird davon ausgegangen, dass von einer Station in der Regel nur eine Frequenz für den Datenaustausch genutzt wird, während auf den anderen Frequenzen nur empfangen wird, um die Belegung und einen möglichen Frequenzwechsel vorzubereiten. Um gleichzeitig auf anderen Frequenzen empfangen zu können, wird dazu vorgeschlagen, zwei Transceiver zu verwenden, einen für den Datenaustausch, und den zweiten für die Messung anderer, potenziell verwendbarer Frequenzen. Eine Nutzung mehrerer verfügbarer Frequenzen für die Kommunikation mit benachbarten Stationen für den Datenaustausch wird jedoch auch hierin nicht beschrieben.

In dem Schnurlos-Telefon-Standard DECT (Digital Enhanced Cordless Telephone) ist eine flexible Nutzung der Ressourcen inklusive verschiedener Frequenzkanäle spezifiziert. Das Verfahren zur Nutzung der Ressourcen wird Dynamic Channel Selection (DCS) genannt. In dem System steuert in dem so genannten "Basic Mode" eine Basisstation exklusiv die Ressourcenvergabe, wobei die Weiterleitung (engl. relaying) von Datenpaketen unterstützt wird. Dazu wird ähnlich wie in einem verteilten, dezentralen System die Verfügbarkeit der Ressourcen geprüft und belegt.

Aufgrund der speziellen Rolle der Basisstation sind die Mechanismen des DECT-Systems nicht auf dezentral organisierte Systeme anwendbar. Zudem ist bei DECT eine direkte Kommunikation zwischen den Stationen oder auch ein Aufbau von mehreren parallelen Verbindungen auf verschiedenen Frequenzkanälen nicht vorgesehen. Vielmehr sucht eine Station einen Frequenzkanal und erniedrigt bzw. erhöht die Datenrate durch die Wahl einer Anzahl von Zeitschlitzen.

Aus M. Lott, M. Meincke, R. Halfmann, "Exploitation of Multiple Frequency Channels in WLAN", in Proc. of WIT (Int. Workshop on Intelligent Transportation), Hamburg, Deutschland, März 2004 ist ein Verfahren bekannt, bei dem zur Signalübertragung in einem Funk-Kommunikationssystem mit zumindest zwei Frequenzkanälen eine Station nach einem konstanten zeitlichen Muster auf einen der Frequenzkanäle zum Senden und/oder Empfangen von Signalen bzw. Daten zugreift. In einem derartigen asynchronen Funk-Kommunikationssystem wählt jede Station eine gleiche Rahmengröße bzw. Dauer eines virtuellen Rahmens und Periode für die Übertragung von hoch priorisierten Nachrichten über einen hoch priorisierten Frequenzkanal. Der zeitliche Startpunkt solcher virtueller Rahmen kann durch jede Station unabhängig definiert werden. Dieses Verfahren garantiert, dass alle wichtigen Nachrichten auf einer Koordinationsfrequenz von allen Stationen spätestens nach einem virtuellen Rahmen empfangen werden und gleichzeitig beliebige andere Frequenzen durch die einzelnen Stationen für eine Kommunikation untereinander genutzt werden können. Jede Station muss vorteilhafterweise nur eine einzige Sende-/Empfangseinrichtung für den Zugriff auf einen einzelnen Frequenzkanal aufweisen, was die Stationen kostengünstig herstellbar macht.

Nachteilig bei diesem Verfahren ist der Effizienzverlust durch die Asynchronität der Teilnehmer. Gemäß diesem Verfahren muss jede Station für eine asynchrone Abwesenheitszeit von einem momentan genutzten Frequenzkanal zu dem Koordinations-Frequenzkanal wechseln. Die Dauer der Abwesenheit der Station, d. h. wie lange eine Station auf der Koordinationsfrequenz zuhört, ist für die Effizienz von Bedeutung.

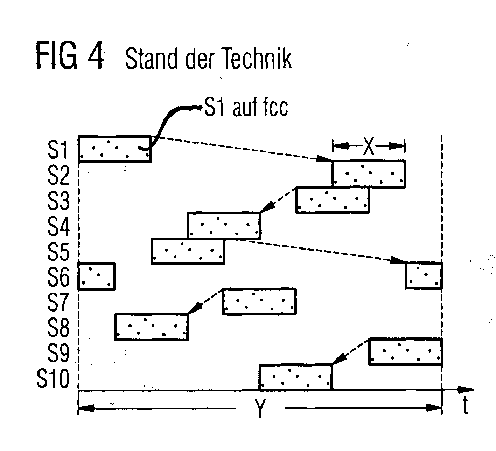

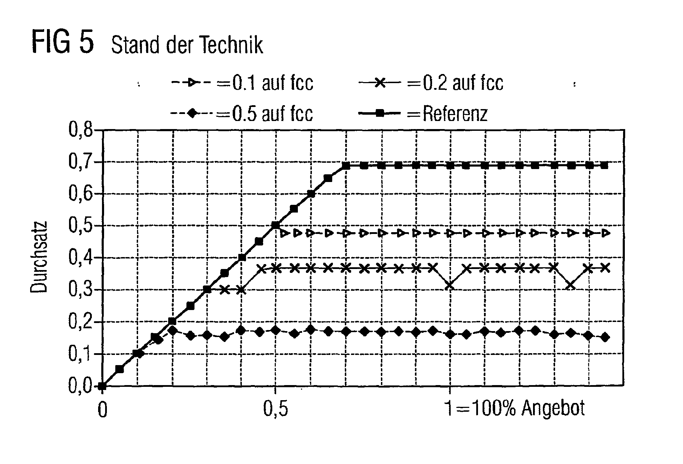

FIG 4 stellt eine Situation mit zehn kommunizierenden Stationen S1 - S10 dar, welche für eine Dauer von 20 % des virtuellen Rahmens auf die Koordinationsfrequenz wechseln. FIG 5 zeigt den entsprechenden Verlust an maximal möglicher Datenrate, d. h. den resultierenden Durchsatz, mit der Abwesenheitszeit als Parameter der verschiedenen Kurven verdeutlicht. Dargestellt ist somit der Durchsatz über dem auf einem physikalischen Kanal übertragenen Angebot an zu sendenden Daten, die auf dem Funkkanal tatsächlich angeboten werden. Der Wert 1 entspricht dabei 100 %. Ersichtlich ist, dass bei einer Abwesenheitszeit von 10 ms (0,1) bei einem virtuellen Rahmen von 100 ms, das entspricht 10 % Abwesenheitszeit, ein Verlust von ca. 25 % an Durchsatz im Vergleich zu einem Referenz-Betrieb ohne Frequenzwechsel resultiert. Der Verlust erhöht sich um weitere 10 % bzw. 40 %, wenn die Abwesenheitszeiten auf 20 % bzw. 50 % erhöht werden (0,2 bzw. 0,5).

In diesem Fall wird unter Annahme eines 4-Wege-Handshakes mit einer Sendeanforderung bzw. einem Sendebereitschaftssignal (Request-To-Send/RTS) durch eine Station, welche Daten senden möchte, und einem Empfangsbereitschaftssignal (Clear-To-Send/CTS) einer Station, welche das Signal empfangen hat und zum Empfang bereit ist, in rechnerisch 10 % der Fälle nicht geantwortet. Dies führt zu einer Verdoppelung des Inhaltsfensters zum Bestimmen eines Backoff, d.h. einer Passivzeit, und wiederholter Übertragungsversuche der sendenden Station nach einem entsprechenden Time-Out (deutsch: Zeitüberwachungsablauf). Im schlimmsten Fall ist die Zielstation für die nächsten 10 ms abwesend, was dazu führt, dass eine Station mit Sendebedarf eine Vielzahl von erneuten Übertragungsversuchen unternimmt und das Backoff-Fenster unnötig vergrößert. Ein solcher Mechanismus ist aus IEEE082.11 bekannt, um einen Stau zu vermeiden und die Zugriffsversuchsrate unter hohen Lastbedingungen zu reduzieren und gleichzeitig die Kollisionswahrscheinlichkeit von RTS-Steuerpaketen zu reduzieren. In dem asynchronen Schaltszenario werden die ausbleibenden Antworten als Stau missinterpretiert. Außerdem erhöhen die nicht erfolgreichen und nutzlosen RTS-Übertragungen die Last in dem System und verringern folglich den erzielbaren Durchsatz.

Aufgabe der Erfindung ist somit, in einem dezentral organisierten System eine möglichst effiziente Nutzung mehrerer zur Verfügung stehender Frequenzkanäle zu ermöglichen. Diese Aufgabe wird durch die Merkmale der unabhängigen Patentansprüche gelöst. Weiterbildungen der Erfindung sind jeweils abhängigen Patentansprüchen entnehmbar.

Vorteilhaft ist verfahrensgemäß insbesondere ein Verfahren zur Signalübertragung in einem asynchronen Funk-Kommunikationssystem, das zumindest zwei Frequenzkanäle bereit stellt und für eine Kommunikationsübertragung zwischen zumindest zwei asynchron betriebenen Stationen über die Frequenzkanäle ausgelegt ist und bei dem für die beiden Stationen für die Kommunikations-Übertragung ein gemeinsamer Zeitbereich zur Sende- und/oder Empfangsbereitschaft für einen asynchronen Datenaustausch definiert wird.

Gemäß eigenständiger Ausgestaltung und eigenständigem erfinderischen Aspekt ist vorteilhaft insbesondere ein Verfahren, bei dem eine der Stationen vor der Kommunikations-Übertragung zum Abstimmen der Sende- bzw. Empfangsbereitschaft ein Sendebereitschaftssignal mit variierenden, zeitlich entweder ab-oder zunehmenden Abständen aussendet. Ein solches Verfahren ist auch eigenständig und unabhängig von dem vorstehend beschrieben Verfahren vorteilhaft.

Insbesondere vorteilhaft ist ein solches Verfahren, wenn die aussendende Station, nach Erhalt einer Antwort von der anderen Station ihren Zeitrahmen zur Anpassung des Zeitrahmens der anderen Station signalisiert und/oder ihren eigenen Zeitrahmen an den Zeitrahmen der empfangenden Station anpasst. Bei einer solchen Verfahrensweise passt sich gemäß einer ersten Variante die sendende Station, bzw. die Station, die signalisieren oder Daten senden möchte, in vorteilhafter Weise hinsichtlich ihres eigenen zeitrahmens an den Zeitrahmen der empfangenden Station an. Gemäß einer zweiten Variante passt die empfangende Station Ihren Zeitrahmen an den der sendenden Station an. Gemäß einer dritten Variante ist auch eine beiderseitige Anpassung möglich. Dabei werden beispielsweise die Startpunkte der Zeitrahmen aneinander angepasst, insbesondere nur grob mit Blick auf abgestimmte gemeinsame Sende- und Empfangszeiten bei Beibehaltung der eigentlichen Asynchronität.

Insbesondere vorteilhaft ist ein solches Verfahren, wenn die größten zeitlich zu- oder abnehmenden Abstände kürzer und/oder gleich lang wie die Empfangszeitdauer sind. Die Empfangszeitdauer entspricht der Zeit, während der Stationen auf einer vorgegebenen Frequenz empfangsbereit sind, um vorzugsweise hoch priorisierte Broadcast-Pakete zu empfangen.

Gemäß eigenständiger erfinderischer Ausgestaltung ist besonders vorteilhaft ein Verfahren, bei dem zum Abstimmen der Sende- bzw. Empfangsbereitschaft eine der Stationen der anderen der Stationen vor der Kommunikations-Übertragung einen Zeitpunkt des Beginns der Kommunikations-Übertragung oder einer Empfangsbereitschaft auf einem entsprechenden Frequenzkanal signalisiert.

Insbesondere vorteilhaft ist ein Verfahren, bei dem zum Abstimmen der Sende- bzw. Empfangsbereitschaft eine der Stationen der anderen der Stationen vor der Kommunikations-Übertragung einen für die Kommunikations-Übertragung zu verwendenden Frequenzkanal der Frequenzkanäle signalisiert.

Insbesondere vorteilhaft ist ein Verfahren, bei dem zum Abstimmen der Sende- bzw. Empfangsbereitschaft eine der Stationen der anderen der Stationen vor einer solchen Kommunikations-Übertragung einen Wechsel zu einem nachfolgend verwendeten Frequenzkanal der Frequenzkanäle signalisiert.

Insbesondere vorteilhaft ist ein Verfahren, bei dem zum Abstimmen der Sende- bzw. Empfangsbereitschaft eine der Stationen der anderen der Stationen einen Zeitpunkt der Kommunikations-Übertragung und/oder einen Zeitpunkt eines Wechsels des Frequenzkanals signalisiert.

Insbesondere vorteilhaft ist ein solches Verfahren, wenn der Zeitpunkt relativ zum Aussendezeitpunkt der Signalisierung festgelegt wird.

Insbesondere vorteilhaft ist ein solches Verfahren mit einer Signalisierung, wenn die Signalisierung über ein Rundfunkpaket, über ein Datenpaket, über ein Sendebereitschaftssignal und/oder über ein Empfangsbereitschaftssignal übertragen wird.

Insbesondere vorteilhaft ist ein Verfahren, bei dem Signale zum Abstimmen der Sende- bzw. Empfangsbereitschaft der Kommunikations-Übertragung über einen ersten Frequenzkanal der Frequenzkanäle übertragen werden und bei dem die Kommunikations-Übertragung über einen anderen Frequenzkanal der Frequenzkanäle durchgeführt wird.

Insbesondere vorteilhaft ist ein Verfahren, bei dem Signale zum Abstimmen der Sende- bzw. Empfangsbereitschaft der Kommunikations-Übertragung über einen Koordinations-Frequenzkanal der Frequenzkanäle übertragen werden und bei dem die Kommunikations-Übertragung über einen anderen Frequenzkanal der Frequenzkanäle durchgeführt wird.

Insbesondere vorteilhaft ist ein Verfahren, bei dem die Stationen nur für die Dauer der Kommunikations-Übertragung und/oder für die Dauer einer Abfolge von Kommunikations-Übertragungen zwischen diesen Stationen abgestimmt werden.

Insbesondere vorteilhaft ist ein verfahren, bei dem die Stationen bei der Vorbereitung und/oder während der Kommunikations-Übertragung berücksichtigen, dass die jeweils andere der Stationen einen verbliebenen Abstimmungsversatz hat.

Insbesondere vorteilhaft ist ein Verfahren, bei dem eine weitere Station, die nicht mit den kommunizierenden Stationen kommuniziert, einen Wechsel des verwendeten Frequenzkanals und/oder einen Wechsel von Empfangs- und/oder Sendezeiten asynchron und versetzt zu den kommunizierenden Stationen mit einer Kommunikations-Übertragung durchführt.

Insbesondere vorteilhaft ist ein Verfahren nach einem vorstehenden Anspruch, bei dem alle Stationen nach einem Zeitmuster auf zumindest einen der Frequenzkanäle zugreifen.

Insbesondere vorteilhaft ist ein Verfahren, bei dem die eine der Stationen und die zumindest eine weitere der Stationen stationsindividuelle zeitliche Muster zum Zugriff auf die Frequenzkanäle nutzen.

Insbesondere vorteilhaft ist ein Verfahren, bei dem als das Funk-Kommunikationssystem ein dezentral organisiertes Funk-Kommunikationssystem verwendet wird.

Vorrichtungsgemäß ist von besonderem Vorteil eine Station für ein asynchrones Funk-Kommunikationssystem, wobei die Station zumindest mit einer Sende-/Empfangseinrichtung zum wahlweisen Zugriff auf jeweils einen Frequenzkanal von zumindest zwei Frequenzkanälen des Funk-Kommunikationssystem zum Senden und/oder zum Empfangen von Signalen ausgestaltet ist, wobei die Station für eine Kommunikations-Übertragung zeitweilig mit einer für die Kommunikations-Übertragung kommunizierenden anderen Station abstimmbar ausgestaltet ist. Besonders vorteilhaft ist eine solche Station, wenn diese zum Ausführen eines der beschriebenen vorteilhaften Verfahren einsetzbar ist.

Insbesondere vorteilhaft ist dementsprechend eine Station, wobei die Station einen Zeitgeber zum Aussenden eines Sendebereitschaftssignals mit variierenden, zeitlich entweder abnehmenden oder zunehmenden Abständen aufweist.

Insbesondere vorteilhaft ist dementsprechend außerdem eine Station mit einem Zeitgeber zum Abstimmen der Sende- bzw. Empfangsbereitschaft der Kommunikations-Übertragung und/oder eines Wechsels des Frequenzkanals und zum Signalisieren des Zeitpunktes des Wechsels an die andere der Stationen.

Vorteilhaft wird durch das erfindungsgemäße Verfahren eine Nutzung mehrerer Frequenzkanäle mit nur einer Sende-/Empfangseinrichtung in einem asynchronen System ohne zentrale Instanz ermöglicht.

Die Stationen an sich sind im strengen Sinn noch asynchron, wurden jedoch grob synchronisiert, d.h. sie haben sich zeitlich angenähert. Es handelt sich nicht um eine Synchronisation, die notwendig ist, um Daten miteinander austauschen zu können, wie dies z.B. für eine Rahmen- oder Zeitschlitzsynchronisierung der Fall wäre, welche in synchronen Systemen, z.B. GSM, notwendig wäre. Es handelt sich hier eher um eine Abstimmung bzw. Koordination von Sende- bzw. Empfangsbereitschaftszeiten und somit nur bedingt um eine eigentliche "Synchronisation". Zur Vereinfachung und Erleichterung des Verständnisses wird jedoch auch der Begriff Synchronisation verwendet.

Nachfolgend wird die Erfindung anhand von Ausführungsbeispielen näher erläutert. Es zeigen dabei
- FIG 1: einen beispielhaften wahlfreien Zugriff von Funkstationen auf zwei Frequenzkanäle,
- FIG 2: zwei beispielhafte Rahmen für ein Sendebereitschaftssignal bzw. ein Empfangsbereitschaftssignal,
- FIG 3: ein beispielhaftes Zugriffsmuster zweier Stationen auf zwei verschiedene Frequenzkanäle gemäß einer zweiten, eigenständigen Ausführungsform,
- FIG 4: ein Zugriffsschema einer Vielzahl von Stationen auf einen Frequenzkanal, welcher zur Zugriffskoordinierung dient, gemäß dem Stand der Technik,
- FIG 5: ein Diagramm zur Veranschaulichung des Durchsatzes bei einem solchen Verfahren gemäß dem Stand der Technik,
- FIG 6: ein Zugriffsschema auf den Frequenzkanal zur Koordination entsprechend der zweiten Ausführungsform gemäß FIG 3 und
- FIG 7: ein Diagramm zur Veranschaulichung des Durchsatzes bei einem solchen Verfahren.

Unter dem Begriff Station wird im Umfang der Erfindung ein über Funk kommunikationsfähiges mobiles oder stationäres Teilnehmerendgerät oder aber auch eine beispielsweise einer Maschine zugeordnete Funkstation verstanden. Die folgenden Beispiele basieren auf folgenden Randbedingungen, jedoch ohne auf diese beschränkt zu sein. So ist für die Durchführung des erfindungsgemäßen Verfahrens in jeder Station nur eine Sende-/Empfangseinheit (Transceiver) erforderlich, was vorteilhaft Kosten reduziert. Weiterhin erfolgt ein Zugriff auf Übertragungsmedien, d.h. Frequenzkanäle, nach einem unter dem Begriff Random Access bekannten wahlfreien Zugriffsprotokoll. Es existiert zudem keine zentrale Instanz für eine zentrale Steuerung der Ressourcennutzung, und der Zugriff durch mehrere Stationen erfolgt asynchron, d.h. die Stationen sind nicht miteinander synchronisiert.

Nach einem Zufallszugriff auf einen Frequenzkanal mehrerer verfügbarer Frequenzkanäle sendet die Station beispielsweise ein oder mehrere Datenpakete. Nach dem Senden führt die Station einen Frequenzwechsel durch und empfängt auf einem anderen Frequenzkanal ein oder mehrere Datenpakete einer weiteren Station. Nach diesem Empfangen wiederum greift die Station z.B. mittels eines Zufallszugriffs auf einen dritten Frequenzkanal zu und sendet ein oder mehrere Datenpakete. Der Zugriff erfolgt demnach wahlfrei. Aufgrund der Randbedingung der nur einen Sende-/Empfangseinrichtung kann die Station auf den Frequenzkanälen entweder senden oder empfangen. Der Frequenzwechsel sowie das Umschalten zwischen Senden und Empfangen ist im Allgemeinen mit einer gewissen zeitlichen Verzögerung verbunden.

Zur Vermeidung einer Verschwendung der Kapazität bzw. Bandbreite werden anhand zweier Ausführungsformen nachfolgend Verbesserungen vorgeschlagen, wobei diese in einer kombinierten Ausführungsform und in Verbindung mit einem dezentralisierten FDMA-System besonders vorteilhaft umsetzbar sind.

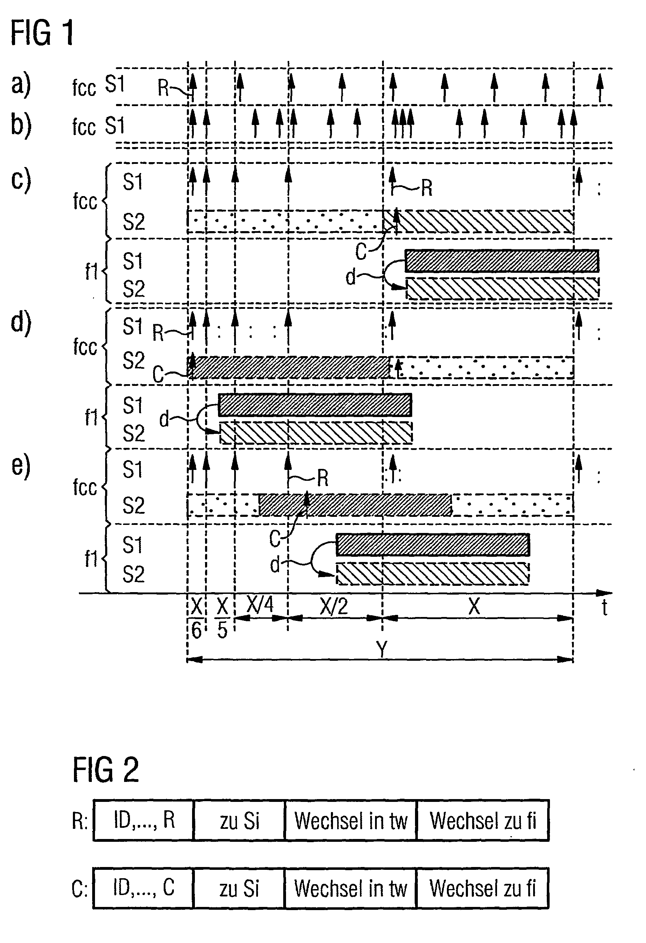

Gemäß der ersten Ausführungsform sendet eine erste Station S1 ein Sendebereitschaftssignal R, insbesondere in Form eines für sich bekannten Sendebereitschaftspaketes (Request-To-Send, RTS) auf einem Frequenzkanal. Vorzugsweise handelt es sich dabei um einen Koordinationsfrequenzkanal fcc, dessen Belegung in FIG 1 veranschaulicht wird. Jede Station greift gemäß einem virtuellen und systemeinheitlichen Zugriffsrahmen in vorgegebenen zeitlichen Abständen auf diesen Frequenzkanal fcc zu.

Die übrige Zeit kann die jeweilige Station auf beliebige andere der verfügbaren Frequenzkanäle zugreifen, weshalb die Zugriffszeit auf den Koordinations-Frequenzkanal fcc nachfolgend auch als Abwesenheitszeit X bezeichnet wird. Diese Abwesenheitszeit X beträgt einen Anteil kleiner einer Dauer Y des Rahmens. Vorzugsweise ist die Dauer der Abwesenheitszeit X deutlich kleiner als die Dauer Y des Rahmens. Beim in FIG 1 dargestellten Ausführungsbeispiel beträgt die Abwesenheitszeit X gemäß der Varianten c) - e) die halbe Zeitdauer Y/2 der Dauer Y des Rahmens.

Falls nach dem Aussenden eines Sendebereitschaftssignals R durch die erste Station S1 kein Empfangsbereitschaftssignal C (Clear-To-Send, CTS) einer weiteren, zweiten Station S2 empfangen wird, geht die erste Station S1 zu einer wiederholten Übertragung des Sendebereitschaftssignals R über, um zu signalisieren, dass sie Daten versenden oder in sonstiger Weise kommunizieren möchte.

Die wiederholte Übertragung des Sendebereitschaftssignals R erfolgt dabei nicht in diskreten und mit gleichem zeitlichen Abstand festgesetzten Abständen, wie dies gemäß Variante a) veranschaulicht ist und aus Exploitation of Multiple Frequency Channels in WLAN, M. Lott, M. Meincke, R. Halfmann, in Proc. of WIT (International Workshop on Intelligent Transportation), Hamburg, Germany, März 2004 bekannt ist.

Die wiederholte Übertragung des Sendebereitschaftssignals R erfolgt auch nicht nach einem rein zufälligen Prinzip, wie dies gemäß Variante b) veranschaulicht ist und für sich genommen aus dem Standard IEEE 802.11 bekannt ist.

Zur Verbesserung des Durchsatzes demgegenüber wird ein Übertragungsschema verwendet, bei welchem weder zufällige noch gleich beabstandete Zeitpunkte für die wiederholte Übertragung des Sendebereitschaftssignals R, sondern zeitlich mit zu- oder abnehmenden Abständen wiederholte Übertragungsversuche durchgeführt werden, wie dies in den Varianten c) - e) in FIG 1 veranschaulicht ist. Dabei wird von einer Abwesenheitszeit X ausgegangen, die beispielhaft der halben Dauer Y des virtuellen Rahmens entspricht.

Nach einer ersten Übertragung eines Sendebereitschaftssignals R und dem Ausbleiben eines Empfangsbereitschaftssignals C erfolgt eine wiederholte Übertragung des Sendebereitschaftssignals R mit einem vorgegebenen zeitlichen Abstand. Dieser vorgegebene zeitliche Abstand entspricht beispielhaft der halben erwarteten Abwesenheitszeit, also X/2 ms. Bei den Varianten c) - e) entspricht die Zeitdauer bis zur ersten wiederholten Übertragung lediglich einem Sechstel der Abwesenheitszeit, also x/6. Wird daraufhin weiterhin kein Empfangsbereitschaftssignal C empfangen, erfolgt eine nochmals wiederholte Übertragung des Sendebereitschaftssignals, und zwar diesmal nach einer größeren Zeitdauer, z. B. einem Fünftel der Abwesenheitszeit, also x/5 ms. Weitere wiederholte Übertragungen erfolgen beispielsweise nach einem Viertel der Abwesenheitszeit, also nach X/4 ms, nach der halben Abwesenheitszeit, also X/2 ms, und nach der Dauer der ganzen Abwesenheitszeit X. Dadurch wird während der Dauer Y eines vollständigen Rahmens maximal sechs Mal ein Sendebereitschaftssignal R von der ersten Station S1 ausgesendet. Spätestens nach dem Aussenden des sechsten Sendebereitschaftssignals R müsste die zweite Station S2 bei der dargestellten Konstellation das Sendebereitschaftssignal R der ersten Station empfangen haben und im Fall der Empfangsbereitschaft ihrerseits ein Empfangsbereitschaftssignal C aussenden.

Sobald die erste Station S1 nach dem Aussenden eines Sendebereitschaftssignals R Energie detektiert, insbesondere Energie oberhalb einer definierten Schwelle detektiert, wird eine Übertragung bzw. Übertragungswiederholung wie z. B. gemäß dem Standard IEEE 802.11 spezifiziert durchgeführt und keine weitere Zeitdauer bis zu einer derart verzögerten wiederholten Übertragung abgewartet. Nach dem Empfang des Empfangsbereitschaftssignals C leitet die erste Station S1 somit die erforderlichen Schritte zur Übertragung von Daten über die Kommunikationsverbindung ein, so dass eine Kommunikations-Übertragung d von der ersten Station S1 zur zweiten Station S2 erfolgt. Diese Kommunikations-Übertragung d wird vorzugsweise auf einem anderen Frequenzkanal f1 durchgeführt, um einen speziellen Frequenzkanal als Koordinations-Frequenzkanal fcc für Koordinationszwecke frei zu halten.

Gemäß der Variante c) liegt die Abwesenheitszeit X der zweiten Station S2, d.h. die Zeitdauer, während welcher die zweite Station S2 auf dem Koordinations-Frequenzkanal fcc sendet oder empfängt, in der zweiten Hälfte des Rahmens der ersten Station S1. Dadurch empfängt die zweite Station S2 erst das fünfte ausgesendete Sendebereitschaftssignal R der ersten Station S1. Nach dessen Empfang sendet die zweite Station S2 ein Empfangsbereitschaftssignal C an die erste Station S1, wozu die zweite Station S2 ebenfalls den Koordinations-Frequenzkanal fcc verwendet. Die erste Station S1 schaltet nach jedem Aussenden eines Sendebereitschaftssignals R in den Empfangszustand, so dass sie solche Empfangsbereitschaftssignale C einer anderen Station auf dem Koordinations-Frequenzkanal fcc empfangen kann.

Natürlich kann die erste Station S1 zwischenzeitlich auch auf einen anderen Frequenzkanal wechseln, um die Zeitdauer zwischen dem möglichen Empfang eines ausbleibenden Empfangsbereitschaftssignals C als Antwort auf ein Sendebereitschaftssignals R und dem Aussenden des nächsten Sendebereitschaftssignals R auf einem anderen der verfügbaren Frequenzkanäle f1,... zu empfangen oder zu senden.

Gemäß Variante d) liegt die Abwesenheitszeit X der zweiten Station S2 bereits zum Beginn der Dauer Y des virtuellen Rahmens der ersten Station S1. Folglich sendet die zweite Station S2 ein Empfangsbereitschaftssignal C bereits nach dem ersten Aussenden eines Sendebereitschaftssignals R durch die erste Station S1, so dass nachfolgend die Kommunikations-Übertragung d von Daten erfolgen kann.

Variante e) zeigt einen Fall, bei dem die Abwesenheitszeit X der zweiten Station S2, d. h. die Empfangszeit der zweiten Station S2 auf dem Koordinations-Frequenzkanal fcc, zeitlich versetzt nach dem Beginn der Dauer Y des virtuellen Rahmens der ersten Station S1 beginnt. Dazu wechseln wiederum beide Stationen gemeinsam in einen anderen Frequenzkanal, beispielsweise den dargestellten ersten Frequenzkanal f1. Unter einem gleichzeitigen Wechsel ist dabei mit Blick auf die asynchrone Ausgestaltung des Systems optional auch ein zeitlich versetztes Wechseln des Frequenzkanals zu verstehen, wobei ein solcher zeitlicher Versatz von den beiden betroffenen und miteinander kommunizierenden Stationen S1, S2 entsprechend berücksichtigt wird.

Variante e) zeigt einen Fall, bei dem die Abwesenheitszeit X der zweiten Station S2 deutlich gegenüber dem Beginn der Zeitdauer Y des Rahmens der ersten Station S1 versetzt beginnt. Entsprechend empfängt die zweite Station S2 erst die dritte Wiederholung des Sendebereitschaftssignals R, woraufhin die zweite Station S2 ein Empfangsbereitschaftssignal C zur ersten Station S2 zurücksendet. Wiederum wechseln beide Stationen daraufhin nach einem vorgegebenen Wechselprinzip in den ersten Frequenzkanal f1 zum Durchführen der Kommunikations-Übertragung d von Daten.

Neben zeitlich zunehmenden Abständen der Aussendung des Sendebereitschaftssignals R sind auch von großen Abständen zeitlich abnehmende Abstände vorteilhaft einsetzbar.

Neben der Möglichkeit einer sofortigen Einleitung einer Kommunikations-Übertragung d auf dem gleichen oder bevorzugt einem anderen Frequenzkanal besteht natürlich auch die Möglichkeit einer zeitlich versetzten Kommunikations-Übertragung, so dass die Kommunikations-Übertragung beispielsweise erst in den nächsten oder übernächsten oder in einen noch späteren virtuellen Rahmen fällt. Insbesondere im Fall einer derart zeitlich versetzten Kommunikations-Übertragung d ist eine zeitliche Koordinierung der Übertragung und gegebenenfalls eines entsprechenden Frequenzwechsels zwischen den kommunizierenden Stationen S1, S2 sehr vorteilhaft. Für eine solche Koordinierung werden die Zeitpunkte tw eines Wechsels oder Übertragungsbeginns und/oder die Frequenzen oder Kanalnummern eines Frequenzkanals fj, zu dem gewechselt wird, zwischen den Stationen S1, S2 ausgetauscht bzw. signalisiert. Eine derartige Signalisierung des Zeitpunktes und/oder Frequenzkanals, zu dem eine Station übertragungsbereit ist bzw. eine andere Frequenz wechselt, ist Gegenstand der zweiten bevorzugten Ausführungsform.

Gemäß dieser zweiten Ausführungsform signalisiert eine Station Si, i = 1, 2, 3,... einer anderen Station Si Daten, welche für eine zeitweilige Synchronisierung dieser momentan oder nachfolgend miteinander kommunizierenden Stationen verwendet werden. Diese signalisierten Daten können sich auf den Zeitpunkt einer Kommunikations-Übertragung d von Daten beziehen. Zusätzlich oder alternativ können sich diese Daten auf eine Frequenz oder einen Frequenzkanal fj beziehen, welche für eine Kommunikations-Übertragung d von Daten verwendet werden. Neben der Übertragung von Zeitpunkten zu denen die eigentliche Kommunikations-Übertragung d von Daten beginnt oder erfolgt, werden bevorzugt Zeitpunkte von Momenten übertragen, zu denen ein Frequenzwechsel durch die signalisierende Station durchgeführt wird.

Die Übertragung solcher Informationen kann insbesondere auf zwei bevorzugte Arten geschehen. Gemäß der ersten Variante wird die Information Huckepack (Piggyback) signalisiert. Die Übertragung dieser Information bzw. Daten kann dabei bevorzugt als Bestandteil eines Sendebereitschaftssignals R, eines Empfangsbereitschaftssignals C oder eines eigentlichen Datenpakets einer Kommunikations-Übertragung d signalisiert werden.

FIG 2 stellt Beispiele für entsprechend ausgestaltete Datenpakete dar. Ein Sendebereitschaftssignal R umfasst beispielsweise neben üblichen Identifizierungsdaten ID und einer Kennung als Sendebereitschaftssignal R optional auch eine Information, zu welcher anderen Station Si dieses Datenpaket bzw. Sendebereitschaftssignal R zu senden ist. Außerdem wird der Zeitpunkt tw einer Aktion mitgeteilt, insbesondere der Zeitpunkt tw des Beginns der Kommunikations-Übertragung d eigentlicher Daten und/oder eines Wechsels in einen bestimmten Frequenzkanal fj. Bei einem Verbleib in dem momentanen Frequenzkanal wird zweckmäßigerweise diese Information des momentanen Frequenzkanals ebenfalls mit übertragen. Entsprechend werden in einem Empfangsbereitschaftssignal C neben einer üblichen Identifizierungsinformation ID und der Kennzeichnung als Empfangsbereitschaftssignal C optional die Station Si, an welche das Empfangsbereitschaftssignal C gerichtet ist, sowie je nach Bedarf ein Zeitpunkt tw eines Wechsels oder einer Empfangsbereitschaft sowie eine Information eines nachfolgend verwendeten Frequenzkanals fj eingesetzt.

Die Zeitpunkte tw werden vorzugsweise relativ zum Aussendezeitpunkt des entsprechenden Paketes RC kodiert. Mit einer Granularität von nur einem Bit können bei einem virtuellen Rahmen mit einer Dauer Y von 100 ms beispielsweise 0,4 ms Abstände kodiert werden.

Gemäß einer zweiten Variante werden die Zeitpunkte tw, zu denen eine Station auf eine bestimmte Frequenz bzw. einen bestimmten Frequenzkanal fj, insbesondere auf die Koordinationsfrequenz bzw. den Koordinationsfrequenzkanal fcc wechselt, auf einer dafür ausgezeichneten Frequenz, z. B. der Koordinationsfrequenz fcc durch ein Signalisierungspaket in Art einer Rundfunkmitteilung (Broadcast) mitgeteilt.

Vorteilhafterweise können die beiden alternativen Ausführungsformen unabhängig voneinander oder kombiniert verwendet werden. Der potenzielle Gewinn der zweiten Ausführungsform mit der Signalisierung von Frequenzumschaltzeitpunkten tw kommt einer Koordination der Frequenzumschaltzeitpunkte gleich. D. h., die Zeitpunkte tw eines Frequenzwechsels bzw. einer Frequenzumschaltung werden in dem asynchronen System zwischen den beteiligten Stationen synchronisiert. Gemäß bevorzugter Varianten wechseln Gruppen von Stationen Si, welche miteinander kommunizieren oder kommunizieren wollen, zu gleichen Zeitpunkten tw die Frequenz. Unter gleichen Zeitpunkten tw sind dabei auch Zeitfenster zu verstehen, welche mit Blick auf die Asynchronität des Systems erforderlich sein können.

Vorteilhafterweise wechseln Stationen Si, i = 1, 2,..., welche nicht mit den miteinander kommunizierenden Stationen kommunizieren möchten, zu anderen Zeitpunkten, d. h. bewusst asynchron, die Frequenz, um die Gefahr von Kollisionen zu vermeiden.

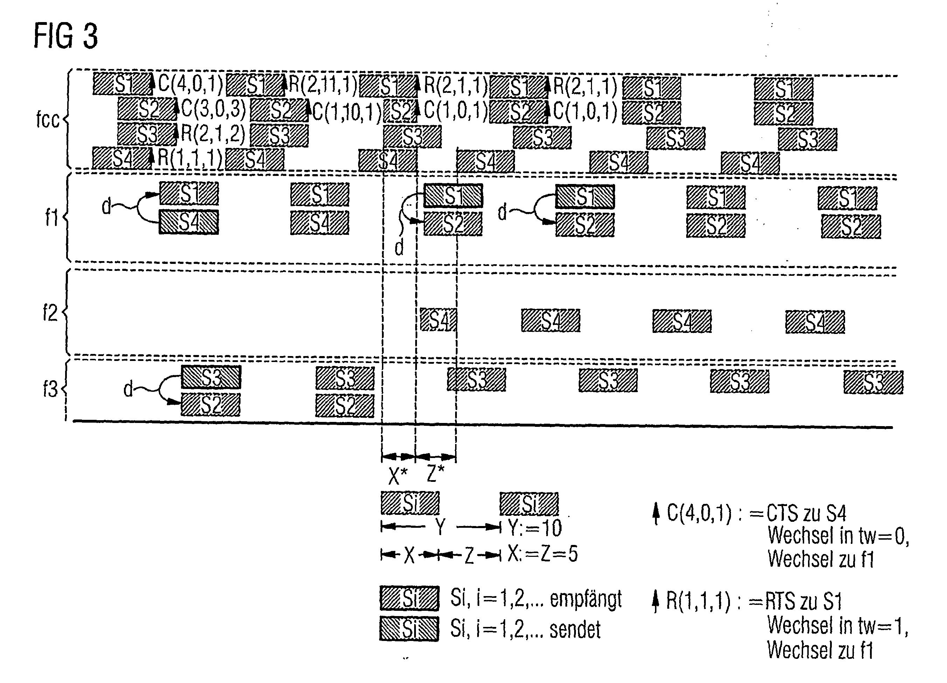

FIG 3 zeigt einen Verfahrensablauf zur beispielhaften Veranschaulichung einer Variante der zweiten Ausführungsform. Das Funk-Kommunikationssystem weist einen Koordinations-Frequenzkanal fcc als einen Frequenzkanal fj zum Koordinieren der einzelnen Stationen Si, i = 1, 2,..., und eine Vielzahl Frequenzkanäle f1, f2, f3 für eine eigentliche Kommunikations-Übertragung d von Daten auf.

Die einzelnen asynchronen Stationen S1 - S4 greifen jeweils für eine Zeitdauer X entsprechend der Abwesenheitszeit X der ersten Ausführungsform innerhalb der Dauer Y eines Rahmens auf den Koordinations-Frequenzkanal fcc im Empfangsmodus zu. Vorteilhafterweise erfolgt der Zugriff so, dass jede der Stationen eine zumindest teilweise Überlappung der Empfangszeit mit möglichen Sendezeiten der anderen Stationen hat. Dargestellt ist ein beispielhafter Sende- und Empfangsablauf über die Zeit t.

Zu einem ersten Zeitpunkt sendet eine vierte Station S4 ein Sendebereitschaftssignal R, welches Informationen entsprechend dem in FIG 2 dargestellten Datenpaket enthält. Diese Informationen beinhalten, dass die Sendebereitschaftsinformation R der vierten Station S4 an die erste Station S1 gerichtet ist und dieser mitteilt, dass die vierte Station S4 nach einer Zeiteinheit eine Kommunikations-Übertragung d in dem ersten Frequenzkanal f1 vornehmen wird. Als Antwort sendet die erste Station S1 ein Empfangsbereitschaftssignal C mit Informationen entsprechend dem in FIG 2 dargestellten Datenpaket. Diese Informationen sind entsprechend an die vierte Station S4 gerichtet und informieren diese über die Empfangsbereitschaft der ersten Station S1 in null Zeiteinheiten auf den ersten Frequenzkanal f1. Nachfolgend wechseln beide Stationen S1, S4 auf den ersten Frequenzkanal f1, auf welchem die vierte Station S4 die Kommunikations-Übertragung d zur Übertragung von Daten an die erste Station S1 beginnt.

Zu einem gegenüber der ersten und der vierten Station S1, S4 zeitlich versetzten Zeitpunkt findet eine entsprechende Signalisierung im Kommunikations-Frequenzkanal fcc zwischen einer dritten und einer zweiten Station S3, S2 mit dem Austausch von Sendebereitschaftssignal R und Empfangsbereitschaftssignal C und nachfolgender Kommunikations-Übertragung d im dritten Frequenzkanal f3 zwischen diesen Stationen S3, S2 statt. Natürlich kann alternativ das Aussenden eines solchen Empfangsbereitschaftssignals C gemäß weiterer Varianten auch teilweise oder ganz entfallen.

Gemäß der bevorzugtesten Ausführungsform wechseln miteinander kommunizierende Stationen spätestens nach dem Ablauf der Dauer Y des virtuellen Rahmens derjenigen Station, deren Dauer Y des virtuellen Rahmens zuerst abläuft, wieder zum Empfangen in den Koordinations-Frequenzkanal fcc zurück. Dies stellt sicher, dass jede einzelne Station über den Koordinations-Frequenzkanal fcc innerhalb der Dauer Y eines virtuellen Rahmens von jeder anderen Station Si erreichbar ist, so dass Notsignale oder hoch priorisierte Daten schnellst möglich weitergeleitet werden können. Gemäß alternativer Ausführungsformen ist jedoch auch ein Wechsel in eine andere Frequenz fj für eine Kommunikations-Übertragung d mit einer Dauer länger als der Dauer Y eines Zeitrahmens prinzipiell möglich und vorteilhaft.

Bei dem beispielhaften Verfahrensablauf wird angenommen, dass nach den beiden Kommunikations-Übertragungen d im ersten bzw. dritten Frequenzkanal f1, f3 keine direkt folgenden Datenübertragungen stattfinden. Mit einem zeitlichen Versatz möchte die erste Station S1 Daten an die zweite Station S2 übersenden. Entsprechend sendet die erste Station S1 während der Zeitdauer ihres Verweilens im Koordinations-Frequenzkanal FCC ein Sendebereitschaftssignal R an die zweite Station S2. Mitgeteilt wird außerdem, dass die erste Station S1 nach elf Zeiteinheiten tw eine Kommunikations-Übertragung d auf dem ersten Frequenzkanal f1 beabsichtigt. Die zweite Station S2 sendet ein entsprechendes Empfangsbereitschaftssignal C an die erste Station S1 und bestätigt die Empfangsbereitschaft nach zehn Zeiteinheiten auf dem ersten Frequenzkanal f1. Da der Zeitpunkt tw bei diesem Beispiel später als die Dauer Y eines Rahmens angesetzt ist, gehen beide Stationen S1, S2 zuvor nochmals in den Koordinations-Frequenzkanal fcc. Nach gegebenenfalls nochmaliger Signalisierung wechseln die beiden Station S1, S2 in den ersten Frequenzkanal f1 für die Kommunikations-Übertragung d.

Da der virtuelle Zeitrahmen der zweiten Station S2 deutlich später beginnt als der virtuelle Zeitrahmen der ersten Station S1 bricht die zweite Station S2 die Abwesenheitszeit X nach einer verkürzten Abwesenheitszeit X*, d. h. nach einer verkürzten Empfangsbereitschaft auf dem Koordinations-Frequenzkanal fcc ab und wechselt vorzeitig in den erste Frequenzkanal s1. Vorzugsweise passt die zweite Station S2 dabei ihren eigenen virtuellen Zeitrahmen bezüglich dessen Startzeitpunkt an den virtuellen Zeitrahmen der ersten Station S1 an, so dass diese beiden Stationen S1, S2 von diesem Zeitpunkt an relativ zueinander synchronisiert sind.

Gegebenenfalls verbleibt dabei ein restlicher Versatz hinsichtlich der Synchronisierung. Gemäß anderer Varianten kann diese angepasste Synchronisierung aber auch bis zu einer späteren Anpassung beibehalten werden.

Bevorzugt werden Ausführungsformen, bei denen während einer Kommunikations-Übertragung d zwischen zwei oder mehr Stationen S1, S2 weitere Stationen, z. B. die vierte Station S4, welche nicht an dieser Kommunikations-Übertragung d beteiligt sind, ein anderes Frequenzband f2 und/oder eine zeitlich versetzte Synchronisierung ihres virtuellen Zeitrahmens vornehmen. Bei der dargestellten Ausführungsvariante wechselt die vierte Station S4 aufgrund der beabsichtigten Kommunikations-Übertragung d der ersten und der zweiten Station S1, S2 zwischenzeitlich in das freie zweite Frequenzband f2. Außerdem erkennt die vierte Station S4, welche durch die frühere Kommunikations-Übertragung d zu der ersten Station S1 synchronisiert war, dass eine neue Synchronisierung ihres virtuellen Zeitrahmens zweckmäßig ist. Entsprechend wechselt die vierte Station S4 zu einem früheren Zeitpunkt nach einer verkürzten Zeitdauer Z* in den Koordinations-Frequenzkanal fcc zurück und passt außerdem den Beginn der Dauer Y ihres eigenen virtuellen Zeitrahmens entsprechend neu an. Dadurch wird die vierte Station S4 hinsichtlich ihres virtuellen Zeitrahmens asynchron zu den virtuellen Zeitrahmen der ersten und der zweiten Station S1, S2.

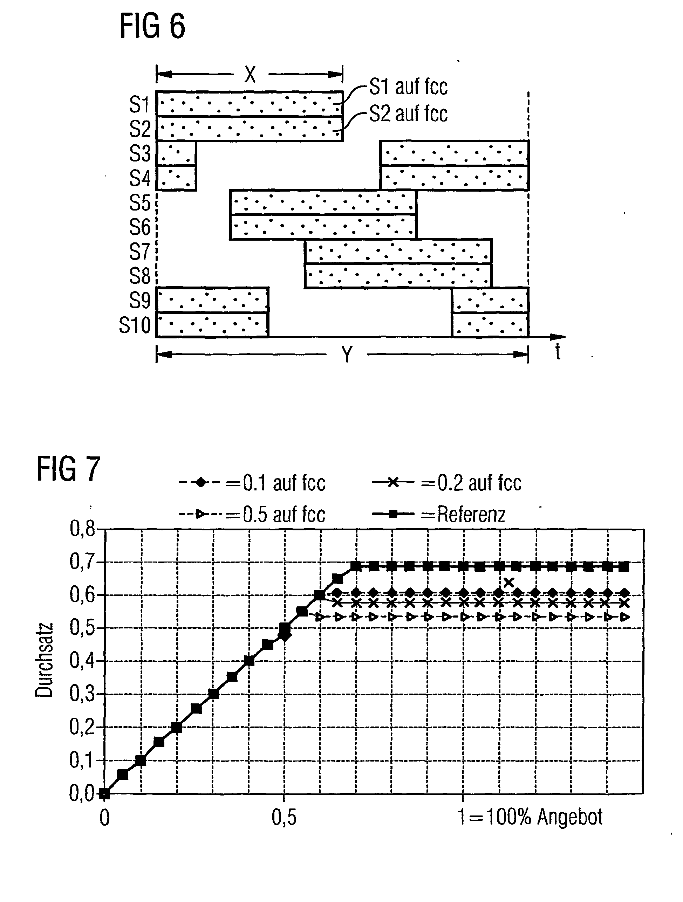

FIG 6 zeigt eine Variante mit einer Kombination der beiden Ausführungsformen. Insgesamt zehn Stationen S1 - S10 kommunizieren in eine asynchronen Funk-Kommunikationssystem mit einem Koordinationsfrequenzkanal fcc und einer Vielzahl von Frequenzkanälen fj, welche für eigentliche Kommunikations-Übertragungen von Daten dienen. Bei der dargestellten Variante ist der Verlauf über die Zeit t für die Dauer Y einer virtuellen Rahmenlänge skizziert. Dargestellt ist jeweils die Abwesenheitszeit X als punktierter Kasten für die zehn Stationen. Unter der Abwesenheitszeit X ist wiederum die Zeit zu verstehen, während der die einzelnen Stationen S1 - S10 sich nicht zum Senden oder Empfangen auf einem der Frequenzkanäle, sondern auf dem Koordinationsfrequenzkanal fcc befinden. Die Abwesenheitszeit X beträgt beispielhaft 50 % der Dauer Y des virtuellen Rahmens. Die einzelnen virtuellen Rahmen der verschiedenen Stationen S1 - S10 sind vorteilhafterweise asynchron zueinander, wobei jeweils miteinander kommunizierende Stationen S1, S2; S3, S4; S5, S6; S7, S8; S9, S10 miteinander synchronisiert sind.

Der erzielbare Durchsatz bei einem solchen asynchronen dezentralen FDMA-Verfahren mit zeitweiliger Synchronisierung miteinander kommunizierender Stationen ist in FIG 7 veranschaulicht. Die verschiedenen Kurven skizzieren dabei den Durchsatz abhängig von der Dauer der jeweiligen Abwesenheitszeit X. Ersichtlich ist, dass er erzielbare Durchsatz von der Dauer der Abwesenheitszeit X nahezu unabhängig ist. Außerdem ist der Verlust gegenüber dem als Referenzkurve dargestellten Fall, dass kein Frequenzwechsel durchgeführt wird, nur minimal. Die Gewinne des Durchsatzes im Vergleich zum asynchronen und unkoordinierten Betrieb gemäß FIG 5 sind im Vergleich deutlich zu erkennen.

Vorteilhaft ist demgemäß insbesondere ein asynchrones dezentrales Funk-Kommunikationssystem bzw. ein Verfahren zum Betreiben von Stationen in einem solchen, wenn ein Frequenzumschaltmuster mit definierten Wechseln der Frequenz vorgegeben wird, wobei die Stationen des asynchronen Systems zwischen den verfügbaren Frequenzen wechseln. Außerdem werden die Zeitpunkte tw, wann eine Station Si die Frequenz fj wechselt, signalisiert, so dass letztendlich eine Signalisierung des Frequenzumschaltmusters vorgenommen wird. Stationen, welche miteinander kommunizieren wollen, wählen vorteilhafterweise gleiche Zeitpunkte tw für einen Frequenzwechsel aus. Stationen, die nicht miteinander kommunizieren wollen, wählen vorteilhafterweise unterschiedliche Zeitpunkte aus, um die verfügbaren Übertragungsressourcen möglichst gleichmäßig zu nutzen. Die Abstände für das Empfangen und Senden werden dabei vorteilhafterweise systemweit vorgegeben, können aber relativ zueinander variieren. Insbesondere sind die Startpunkte von virtuellen Übertragungsnamen hinsichtlich der Startzeit relativ zu den virtuellen Übertragungsrahmen anderer Stationen anpassbar.

Ein solches System bietet eine Vielzahl von Vorteilen. In einem asynchronen System wird die Nutzung mehrerer Frequenzkanäle fcc, fj, j = 1, 2,..., mit nur einem Transceiver ermöglicht, ohne die Existenz einer zentralen Instanz vorauszusetzen. Durch das verwendete Verfahren werden der Empfang und das Senden auf Kanälen unterschiedlicher Prioritäten ermöglicht. Außerdem kann garantiert werden, dass bestimmte Signale oder Nachrichten innerhalb einer definierten Zeit von allen Stationen empfangen werden können. In den Zeiträumen, in denen Stationen nicht auf höher priorisierten Kanälen und/oder einem Koordinations-Frequenzkanal arbeiten müssen, können die restlichen Kanäle verwendet werden. Bei den vorliegend dargestellten Ausführungsbeispielen ist der Koordinations-Frequenzkanal fcc beispielsweise eine Art höher priorisierter Kanal, während die übrigen Frequenzkanäle fi, i = 1, 2, 3 nicht priorisierte Kanäle darstellen. Jedoch sind auch weitere priorisierte Kanäle einsetzbar.

Die Asynchronität des Systems beeinflusst die Funktionalität des Verfahrens nicht nachteilhaft. Im Gegenteil entstehen keine Phasen, in denen einzelne Kanäle unbenutzt bleiben müssen, da jede Station die zeitliche Position ihrer Arbeitsphasen auf den priorisierten Kanälen innerhalb des betrachteten Zeitraumes der Dauer Y ms des virtuellen Zeitrahmens frei wählen kann.

Durch die Koordination der Umschaltpunkte bzw. des Wechsels zwischen verschiedenen Frequenzkanälen fcc, fi kann die Effizienz gegenüber einem asynchronen Betrieb ohne die Anwendung eines solchen Verfahrens deutlich erhöht werden. Mehrere Frequenzen können gleichzeitig genutzt werden, ohne dass wesentliche Durchsatzverluste im Vergleich zu einem System auftreten, welches mehrere Transceiver pro Station erforderlich macht, um mit mehreren Frequenzkanälen arbeiten zu können.

Der Einfluss der Abwesenheitszeit X ist nahezu vernachlässigbar für die Effizienz des Verfahrens. Durch die Asynchronität verschiedener gebildeter Gruppen aus miteinander kommunizierenden Stationen können durch statistisches Multiplexen alle Frequenzkanäle fj ausgenutzt werden. Zu den Zeiten, zu denen eine Gruppe auf einem Frequenzkanal fj abwesend ist, kann eine andere Station oder Gruppe den entsprechenden Frequenzkanal verwenden.

Das Synchronisieren einzelner der Stationen miteinander erfolgt nicht zwingend aber vorteilhafterweise gemäß einem Muster unter Berücksichtigung eines systemeinheitlichen virtuellen Rahmens. Das Muster legt somit für eine Station fest, wann und wie häufig die Station innerhalb des virtuellen Rahmens auf Frequenzkanälen mit höher priorisierten Daten bzw. Signalen empfangen muss, und wann und wie lange sie entsprechend priorisierte Daten bzw. Signale aussenden muss. Die zeitlichen Abstände zwischen Senden und Empfangen sind beispielsweise systemweit vorgegeben, sie können jedoch relativ zueinander variieren.

Das erfindungsgemäße Verfahren kann vorteilhaft in dem derzeit im Standardisierungsprozess befindlichen DSRC-System (Dedicated Short Range Communication) verwirklicht werden. Das DSRC-System soll eine digitale Kommunikation zwischen Fahrzeugen und Fahrbahnrand, sowie zwischen Fahrzeugen untereinander ermöglichen. Dabei dient es sowohl sicherheitstechnischen, beispielsweise Weitergabe von Gefahrenmeldungen, als auch privaten bzw. öffentlichen Anwendungen, wie beispielsweise Maut-Erfassung, Internetzugang im Fahrzeug etc.

Als Basis für den Funkzugang des DSRC-Systems ist der IEEE-Standard 802.11 vorgesehen, der jedoch im Rahmen der Standardisierung zu einem so genannten Road Access Standard 802.11aR/A erweitert werden soll. Das System stellt, wie in FIG 5 dargestellt, sieben Frequenzkanäle im Frequenzspektrum von 5850 bis 5925 MHz zur Verfügung. Einer der Frequenzkanäle ist dabei als ein Kontrollkanal definiert, der vorwiegend zur Übertragung sicherheitsrelevanter Nachrichten wie beispielsweise Gefahrenmeldungen, genutzt werden soll. Die weiteren Frequenzkanäle dienen als Servicekanäle für die Übertragung weiterer Daten, beispielsweise zur Verkehrsflusssteuerung, Inter-Fahrzeug-Kommunikation oder Maut-Erfassung. Der Kontrollkanal soll ebenfalls für Ankündigungen von Zeit, Art und Umfang dieser Nachrichten genutzt werden. Charakteristisch für sicherheitsrelevante Nachrichten ist eine sich periodisch wiederholende Aussendung, um ihren Empfang durch die Fahrzeuge zu gewährleisten.

Der Zugriff auf das Medium, d.h. der so genannten Medium Access Control (MAC), innerhalb der Kanäle erfolgt zufallsgesteuert nach dem bekannten CSMA/CA-Verfahren (Carrier Sense Multiple Access/Collision Avoidance) des IEEE-802.11-Standards. Dies bedeutet, dass der Zugriff asynchron und dezentral ohne Steuerung durch eine zentrale Instanz.

Das erfindungsgemäße Verfahren kann in einem DSRC-System, das vorzugsweise einen FDMA-Betrieb für Systeme auf Basis von IEEE 802.11a vorsieht, beispielsweise entsprechend den vorangehenden Ausführungsbeispielen verwirklicht werden. Der Frequenzkanal mit der höchsten Priorität wäre entsprechend der Kontrollkanal fcc des DSRC-Systems, und der Frequenzkanal f1 mit der nächstniedrigeren Priorität der Kanal für öffentliche Sicherheitsanwendungen. Alle weiteren Kanäle sind nicht priorisiert und entsprächen somit dem zweiten oder dritten Frequenzkanal f2, f3 der obigen Beispiele.

## Patentansprüche

1. Verfahren zur Signalübertragung in einem Funk-Kommunikationssystem ohne zentrale Instanz, das zumindest zwei Frequenzkanäle (fcc, f1, f2, f3, ...) für eine Kommunikations-Übertragung (d) zwischen zumindest zwei asynchron betriebenen Stationen (S1, S2) ohne zentrale Instanz bereitstellt,
**dadurch gekennzeichnet,**
**dass** die Sende- und/oder Empfangsbereitschaft zwischen den zumindest zwei Stationen (S1, S2) auf einem (fcc) der zumindest zwei Frequenzkanäle (fcc, f1, f2, f3, ...) abgestimmt wird, bevor die Kommunikations-Übertragung (d) zwischen den zumindest zwei Stationen (S1, S2) auf einem anderen (f1, f2, f3, ...) der zumindest zwei Frequenzkanäle (fcc, f1, f2, f3, ...) erfolgt.

2. Verfahren nach Anspruch 1,
**dadurch gekennzeichnet,**
**dass** von einer ersten der zumindest zwei Stationen (S1) vor der Kommunikations-Übertragung (d) zum Abstimmen der Sende-und/oder Empfangsbereitschaft ein Sendebereitschaftssignal (R, RTS) mit variierenden, zeitlich ab- oder zunehmenden Abständen ausgesendet wird.

3. Verfahren nach Anspruch 2, bei dem
die erste Station (S1) nach Erhalt einer Antwort von einer zweiten der zumindest zwei Stationen (S2) einen Zeitrahmen zur Anpassung des Zeitrahmens der zweiten Station (S2) signalisiert und/oder ihren Zeitrahmen an den Zeitrahmen der zweiten Station (S2) anpasst.

4. Verfahren nach Anspruch 2 oder 3, bei dem
die größten zeitlich zu- oder abnehmenden Abstände kürzer als und/oder gleich lang einer Abwesenheitszeit (X) sind.

5. Verfahren nach einem vorstehenden Anspruch, bei dem
zum Abstimmen der Sende- und/oder Empfangsbereitschaft die erste Station (S1) der zweiten Station (S2) vor der Kommunikations-Übertragung (d) einen Zeitpunkt (tw) des Beginns der Kommunikations-Übertragung (d) oder einer Empfangsbereitschaft signalisiert.

6. Verfahren nach einem vorstehenden Anspruch, bei dem
zum Abstimmen der Sende- und/oder Empfangsbereitschaft die erste Station (S1) der zweiten Station (S2) vor der Kommunikations-Übertragung (d) einen für die Kommunikations-Übertragung (d) zu verwendenden Frequenzkanal (f1) der Frequenzkanäle (fcc, f1, f2, f3, ...) signalisiert.

7. Verfahren nach einem vorstehenden Anspruch, bei dem
zum Abstimmen der Sende- und/oder Empfangsbereitschaft die erste Station (S1) der zweiten Station (S2) vor der Kommunikations-Übertragung (d) einen Wechsel zu einem nachfolgend zu verwendenden Frequenzkanal (f1) der Frequenzkanäle (fcc, f1, f2, f3, ...) signalisiert.

8. Verfahren nach einem vorstehenden Anspruch, bei dem
zum Abstimmen der Sende- und/oder Empfangsbereitschaft die erste Station (S1) der zweiten Station (S2) einen Zeitpunkt der Kommunikations-Übertragung (d) und/oder einen Zeitpunkt eines Wechsels des Frequenzkanals signalisiert.

9. Verfahren nach Anspruch 8, bei dem
der Zeitpunkt relativ zum Aussendezeitpunkt der Signalisierung gewählt wird.

10. Verfahren nach einem der Ansprüche 5 bis 9, bei dem die Signalisierung über ein Rundfunkpaket, über ein Datenpaket (d), über ein Sendebereitschaftssignal (R, RTS) und/oder über ein Empfangsbereitschaftssignal (C, CTS) übertragen wird.

11. Verfahren nach einem vorstehenden Anspruch, bei dem Signale (R, RTS, C, CTS) zum Abstimmen der Sende- und/oder Empfangsbereitschaft der Kommunikations-Übertragung (d) über einen ersten Frequenzkanal (fcc) der Frequenzkanäle (fcc, f1, f2, f3, ...) übertragen werden, und die Kommunikations-Übertragung (d) über einen weiteren Frequenzkanal (f1) der Frequenzkanäle durchgeführt wird.

12. Verfahren nach einem vorstehenden Anspruch, bei dem Signale (R, RTS, C, CTS) zum Abstimmen der Sende- und/oder Empfangsbereitschaft der Kommunikations-Übertragung (d) über einen Koordinations-Frequenzkanal (fcc) der Frequenzkanäle (fcc, f1, f2, f3, ...) übertragen werden, und die Kommunikations-Übertragung (d) über einen weiteren Frequenzkanal (f1) der Frequenzkanäle durchgeführt wird.

13. Verfahren nach einem vorstehenden Anspruch, bei dem die Stationen (S1, S2) nur für die Dauer der Kommunikations-Übertragung (d) und/oder für die Dauer einer Abfolge von Kommunikations-Übertragungen (d) zwischen den Stationen (S1, S2) abgestimmt werden.

14. Verfahren nach einem vorstehenden Anspruch, bei dem die Stationen (S1, S2) bei der Vorbereitung und/oder während der Kommunikations-Übertragung (d) berücksichtigen, dass die jeweils andere der Stationen (S2, S1) einen verbliebenen Abstimmungsversatz hat.

15. Verfahren nach einem vorstehenden Anspruch, bei dem eine weitere, nicht mit der ersten und zweiten Station (S1, S2) kommunizierende Station (S4) einen Wechsel des verwendeten Frequenzkanals und/oder einen Wechsel von Empfangs-und/oder Sendezeiten asynchron und versetzt zu den miteinander kommunizierenden Stationen (S1, S2) mit einer Kommunikations-Übertragung (d) durchführt.

16. Verfahren nach einem vorstehenden Anspruch, bei dem die Stationen (S1, S2, S3, ...) nach einem Zeitmuster (Y, X) auf zumindest einen der Frequenzkanäle (fcc) zugreifen.

17. Verfahren nach einem vorstehenden Anspruch, bei dem die erste Station (S1) und zumindest die zweite Station (S2) stationsindividuelle zeitliche Muster zum Zugriff auf die Frequenzkanäle nutzen.

18. Asynchron betriebene Station (S1) für ein Funk-Kommunikationssystem ohne zentrale Instanz, mit zumindest einer Sende-/Empfangseinrichtung für einen Zugriff auf einen von zumindest zwei Frequenzkanälen (fcc, f1, f2, f3, ...) des Funk-Kommunikationssystem zum Senden und/oder Empfangen von Signalen,
**gekennzeichnet durch**
Mittel zum Abstimmen der Sende- und/oder Empfangsbereitschaft zu zumindest einer weiteren Station (S2) auf einem (fcc) der zumindest zwei Frequenzkanäle (fcc, f1, f2, f3, ...), bevor eine Kommunikations-Übertragung (d) zwischen ihr und der zumindest einen weiteren Stationen (S2) auf einem anderen (f1, f2, f3, ...) der zumindest zwei Frequenzkanäle (fcc, f1, f2, f3, ...) erfolgt.

19. Station nach Anspruch 18,
**dadurch gekennzeichnet,**
**dass** sie vor einer Kommunikations-Übertragung (d) zum Abstimmen der Sende- und/oder Empfangsbereitschaft ein Sendebereitschaftssignal (R, RTS) mit variierenden, zeitlich ab- oder zunehmenden Abständen aussendet.

20. Station nach Anspruch 18 oder 19, mit
Mitteln zum Steuern eines Wechsels des Frequenzkanals und zum Steuern einer Signalisierung des Zeitpunktes des Wechsels zu der weiteren Station (S2).

## Claims

1. Method for signal transmission in a radio communication system without a central entity, which system provides at least two frequency channels (fcc, f1, f2, f3, ...) for a communication transmission (d) between at least two asynchronously operated stations (S1, S2) without a central entity, **characterized in that** the readiness to transmit and/or receive is aligned on one (fcc) of the at least two frequency channels (fcc, f1, f2, f3, ...) between the at least two stations (S1, S2) before the communication transmission (d) between the at least two stations (S1, S2) is effected on another one (f1, f2, f3, ...) of the at least two frequency channels (fcc, f1, f2, f3, ...).

2. Method according to Claim 1, **characterized in that** a first one of the at least two stations (S1), before the communication transmission (d), sends out a ready-to-transmit signal (R, RTS) with varying intervals decreasing or increasing in time for aligning the readiness to transmit and/or receive.

3. Method according to Claim 2, in which the first station (S1), after receiving a response from a second one of the at least two stations (S2), signals a time frame for aligning the time frame of the second station (S2) and/or aligns its time frame with the time frame of the second station (S2).

4. Method according to Claim 2 or 3, in which the greatest intervals increasing or decreasing in time are shorter than and/or as long as an absence time (X).

5. Method according to a preceding claim, in which, for aligning the readiness to transmit and/or receive, the first station (S1), before the communication transmission (d), signals to the second station (S2) a time (tw) of the beginning of the communication transmission (d) or of a readiness to receive.

6. Method according to a preceding claim, in which, for aligning the readiness to transmit and/or receive, the first station (S1), before the communication transmission (d), signals to the second station (S2) a frequency channel (f1) of the frequency channels (fcc, f1, f2, f3, ...) which is to be used for the communication transmission (d).

7. Method according to a preceding claim, in which, for aligning the readiness to transmit and/or receive, the first station (S1), before the communication transmission (d), signals to the second station (S2) a change to a frequency channel (f1) of the frequency channels (fcc, f1, f2, f3, ...) which is subsequently to be used.

8. Method according to a preceding claim, in which, for aligning the readiness to transmit and/or receive, the first station (S1) signals to the second station (S2) a time of the communication transmission (d) and/or a time of a change of the frequency channel.

9. Method according to Claim 8, in which the time is selected relative to the time of sending out the signalling.

10. Method according to one of Claims 5 to 9, in which the signalling is transmitted via a broadcast packet, via a data packet (d), via a ready-to-transmit signal (R, RTS) and/or via a ready-to-receive signal (C, CTS).

11. Method according to a preceding claim, in which signals (R, RTS, C, CTS) for aligning the readiness to transmit and/or receive the communication transmission (d) are transmitted via a first frequency channel (fcc) of the frequency channels (fcc, f1, f2, f3, ...) and the communication transmission (d) is carried out via a further frequency channel (f1) of the frequency channels.

12. Method according to a preceding claim, in which signals (R, RTS, C, CTS) for aligning the readiness to transmit and/or receive the communication transmission (d) are transmitted via a coordination frequency channel (fcc) of the frequency channels (fcc, f1, f2, f3, ...) and the communication transmission (d) is carried out via a further frequency channel (f1) of the frequency channels.

13. Method according to a preceding claim, in which the stations (S1, S2) are adapted only for the duration of the communication transmission (d) and/or for the duration of a sequence of communication transmissions (d) between the stations (S1, S2).

14. Method according to a preceding claim, in which the stations (S1, S2), in the preparation and/or during the communication transmission (d), take into consideration that the respective other one of the stations (S2, S1) has a remaining misalignment.

15. Method according to a preceding claim, in which a further station (S4), not communicating with the first and second station (S1, S2) carries out a change of the frequency channel used and/or a change of receiving and/or transmitting times asynchronously and offset with respect to the stations (S1, S2) communicating with one another with a communication transmission (d).

16. Method according to a preceding claim, in which the stations (S1, S2, S3, ...) access at least one of the frequency channels (fcc) in accordance with a timing pattern (Y,X).

17. Method according to a preceding claim, in which the first station (S1) and at least the second station (S2) use station-individual timing patterns for accessing the frequency channels.

18. Asynchronously operated station (S1) for a radio communication system without a central entity, with at least one transmitting/receiving device for an access to one of at least two frequency channels (fcc, f1, f2, f3, ...) of the radio communication system for transmitting and/or receiving signals, **characterized by** means for aligning the readiness to transmit and/or receive to at least one further station (S2) on one (fcc) of the at least two frequency channels (fcc, f1, f2, f3, ...) before a communication transmission (d) between said station and the at least one further station (S2) is effected on another one (f1, f2, f3, ...) of the at least two frequency channels (fcc, f1, f2, f 3, ...).

19. Station according to Claim 18, **characterized in that,** before a communication transmission (d), it sends out a ready-to-transmit signal (R, RTS) with varying intervals decreasing or increasing in time for aligning the readiness to transmit and/or receive.

20. Station according to Claim 18 or 19, comprising means for controlling a change of the frequency channel and for controlling a signalling of the time of the change to the other station (S2).

## Revendications

1. Procédé pour la transmission de signal dans un système de radiocommunication sans instance centrale, qui fournit au moins deux canaux de fréquence (fcc, f1, f2, f3, ...) pour une transmission de communication (d) entre au moins deux stations fonctionnant de manière asynchrone (S1, S2) sans instance centrale, **caractérisé en ce que** la disponibilité en émission et/ou réception entre les au moins deux stations (S1, S2) est réglée sur l'un (fcc) des au moins deux canaux de fréquence (fcc, f1, f2, f3, ...) avant que la transmission de communication (d) entre les au moins deux stations (S1, S2) s'effectue sur un autre (f1, f2, f3, ...) des au moins deux canaux de fréquence (fcc, f1, f2, f3, ...).

2. Procédé selon la revendication 1, **caractérisé en ce qu'**une première station (S1) parmi les au moins deux stations envoie, avant la transmission de communication (d), pour régler la disponibilité en émission et/ou réception, un signal de disponibilité d'émission (R, RTS) avec des écarts variables diminuant ou augmentant dans le temps.

3. Procédé selon la revendication 2, selon lequel la première station (S1), après réception d'une réponse d'une deuxième station (S2) parmi les au moins deux stations, signale une trame temporelle pour l'adaptation de la trame temporelle de la deuxième station (S2) et/ou adapte sa trame temporelle à la trame temporelle de la deuxième station (S2).

4. Procédé selon la revendication 2 ou 3, selon lequel les plus grands écarts augmentant ou diminuant dans le temps sont plus courts et/ou égaux à un temps d'absence (X).

5. Procédé selon une revendication précédente, selon lequel, pour régler la disponibilité en émission et/ou réception, la première station (S1) signale à la deuxième station (S2), avant la transmission de communication (d), un instant (tw) du début de la transmission de communication (d) ou d'une disponibilité en réception.

6. Procédé selon une revendication précédente, selon lequel, pour régler la disponibilité en émission et/ou réception, la première station (S1) signale à la deuxième station (S2), avant la transmission de communication (d), un canal de fréquence (f1), parmi les canaux de fréquence (fcc, f1, f2, f3, ...), qui est à utiliser pour la transmission de communication (d).

7. Procédé selon une revendication précédente, selon lequel, pour régler la disponibilité en émission et/ou réception, la première station (S1) signale à la deuxième station (S2), avant la transmission de communication (d), un changement pour un canal de fréquence (f1), parmi les canaux de fréquence (fcc, f1, f2, f3, ...), qui est à utiliser ensuite.

8. Procédé selon une revendication précédente, selon lequel, pour régler la disponibilité en émission et/ou réception, la première station (S1) signale à la deuxième station (S2) un instant de la transmission de communication (d) et/ou un instant d'un changement du canal de fréquence.

9. Procédé selon la revendication 8, selon lequel l'instant choisi est relatif à l'instant d'émission de la signalisation.

10. Procédé selon l'une des revendications 5 à 9, selon lequel la signalisation est transmise par l'intermédiaire d'un paquet radiodiffusé, d'un paquet de données (d), d'un signal de disponibilité d'émission (R, RTS) et/ou d'un signal de disponibilité de réception (C, CTS).

11. Procédé selon une revendication précédente, selon lequel des signaux (R, RTS, C, CTS) pour régler la disponibilité en émission et/ou en réception de la transmission de communication (d) sont transmis par l'intermédiaire d'un premier canal de fréquence (fcc) parmi les canaux de fréquence (fcc, f1, f2, f3, ...) et selon lequel la transmission de communication (d) est effectuée par l'intermédiaire d'un autre canal de fréquence (f1) parmi les canaux de fréquence.

12. Procédé selon une revendication précédente, selon lequel des signaux (R, RTS, C, CTS) pour régler la disponibilité en émission et/ou en réception de la transmission de communication (d) sont transmis par l'intermédiaire d'un canal de fréquence de coordination (fcc) parmi les canaux de fréquence (fcc, f1, f2, f3, ...) et selon lequel la transmission de communication (d) est effectuée par l'intermédiaire d'un autre canal de fréquence (f1) parmi les canaux de fréquence.

13. Procédé selon une revendication précédente, selon lequel les stations (S1, S2) sont réglées seulement pour la durée de la transmission de communication (d) et/ou pour la durée d'une succession de transmissions de communication (d) entre les stations (S1, S2).

14. Procédé selon une revendication précédente, selon lequel les stations (S1, S2), lors de la préparation et/ou pendant la transmission de communication (d), prennent en compte le fait que l'autre station respective (S2, S1) a un décalage de réglage résiduel.

15. Procédé selon une revendication précédente, selon lequel une autre station (S4) ne communiquant pas avec la première et la deuxième station (S1, S2) effectue un changement du canal de fréquence utilisé et/ou un changement d'instants de réception et/ou d'émission de manière asynchrone et décalée par rapport aux stations communiquant entre elles (S1, S2) avec une transmission de communication (d).

16. Procédé selon une revendication précédente, selon lequel les stations (S1, S2, S3, ...) accèdent, selon un modèle temporel (Y, X), à au moins l'un des canaux de fréquence (fcc).

17. Procédé selon une revendication précédente, selon lequel la première station (S1) et au moins la deuxième station (S2) utilisent des modèles temporels, propres aux stations, pour l'accès aux canaux de fréquence.

18. Station (S1) fonctionnant de manière asynchrone pour un système de radiocommunication sans instance centrale, avec au moins un dispositif d'émission/réception pour un accès à canal de fréquence parmi au moins deux canaux de fréquence (fcc, f1, f2, f3, ...) du système de radiocommunication en vue de l'émission et/ou de la réception de signaux,
**caractérisée par** des moyens pour régler la disponibilité en émission et/ou réception pour au moins une autre station (S2) sur un canal de fréquence (fcc) parmi les au moins deux canaux de fréquence (fcc, f1, f2, f3, ...) avant d'effectuer une transmission de communication (d) entre elle et la au moins une autre station (S2) sur un autre canal de fréquence (f1, f2, f3, ...) des au moins deux canaux de fréquence (fcc, f1, f2, f3, ...).

19. Station selon la revendication 18, **caractérisée en ce que**, avant une transmission de communication (d), pour régler la disponibilité en émission et/ou réception, elle envoie un signal de disponibilité d'émission (R, RTS) avec des écarts variables diminuant ou augmentant dans le temps.

20. Station selon la revendication 18 ou 19, avec des moyens pour commander un changement du canal de fréquence et pour commander une signalisation de l'instant du changement pour l'autre station (S2).
